# FASCICULE DE BREVET EUROPEEN

(11) **EP 2 513 472 B1**
(45) Date de publication et mention de la délivrance du brevet: **29.10.2014**
(21) Numéro de dépôt: 10807609.2
(22) Date de dépôt: 17.12.2010
(51) Int. Cl.: F03B 7/00

(54) **ELEMENT DE ROTOR POUR SYSTEME DE PRODUCTION D'ENERGIE ET SYSTEME DE PRODUCTION D'ENERGIE L'UTILISANT**
ROTORELEMENT FÜR EIN ENERGIEERZEUGUNGSSYSTEM UND ENERGIEERZEUGUNGSSYSTEM DAFÜR
ROTOR ELEMENT FOR A POWER GENERATION SYSTEM AND POWER GENERATION SYSTEM USING THE SAME

(30) Priorité: 17.12.2009 FR 0959112
(43) Date de publication de la demande: 24.10.2012
(73) Titulaire: Chaigneau, Marc Albert, 92800 Puteaux (FR)
(72) Inventeur: Chaigneau, Marc Albert, 92800 Puteaux (FR)
(74) Mandataire: Chaillot, Geneviève
(86) Numéro de dépôt international: PCT/FR2010/052781
(87) Numéro de publication internationale: WO 2011/073588

(56) Documents cités:
- FR-A2- 2 442 979
- GB-A- 2 412 948
- US-B1- 7 381 030

## Description

La présente invention porte sur un élément de rotor pour un système de production d'énergie et sur un système de production d'énergie l'utilisant.

Les systèmes de production d'énergie dits « propres », c'est-à-dire utilisant de l'énergie naturelle telle que l'énergie du vent ou des écoulements de fluide, connaissent un succès grandissant.

Il existe ainsi par exemple de nombreux types d'éolienne, à axe horizontal comme à axe vertical, utilisant des rotors de diverses formes.

Les rotors de l'état antérieur de la technique présentent certains inconvénients.

Tout d'abord, pour obtenir une production d'énergie suffisante, le rotor, et donc l'éolienne, doivent être de grandes dimensions pour capter suffisamment d'énergie.

La plupart de ces systèmes ne peuvent donc pas être installés chez des particuliers, ou demandent un temps et un coût d'installation prohibitifs, notamment pour des particuliers.

De plus, généralement, les rotors sont de formes complexes et difficiles à fabriquer et entretenir.

Il existe donc un besoin pour un élément de rotor de structure simple, présentant une surface en contact avec l'écoulement de fluide avec lequel il interagit importante, permettant de produire suffisamment d'énergie avec une taille réduite.

Cet élément de rotor pourra ainsi être utilisé dans des éoliennes miniatures, pouvant être mises en oeuvre chez des particuliers, dans des jardins ou balcons, pour produire de l'électricité.

Ce type d'éolienne, simple de structure, pourra également être installé dans des pays dans lesquels il est à l'heure actuelle impossible d'installer des éoliennes, en raison de leur coût prohibitif de fabrication.

On connaît de la demande de brevet FR2442979 une éolienne ayant un élément de rotor avec des pales juxtaposées sur l'axe de rotor. Cependant, dans l'éolienne décrite dans la demande de brevet FR2442979, la forme des pales de l'élément de rotor ne permet pas une utilisation optimale de l'écoulement de fluide incident.

On connaît également de la demande de brevet GB2412948 un élément de rotor avec des pales juxtaposées sur l'axe de rotor. Les pales sont constituées de deux ailettes en forme de demi-cylindre. L'élément de rotor divulgué dans GB2412948 ne permet pas une utilisation optimale de l'écoulement de fluide incident.

La présente invention vise à résoudre les problèmes de l'état antérieur de la technique, et propose un élément de rotor, notamment apte à être installé sur une éolienne en tant que rotor, ou dans tout dispositif de production d'énergie utilisant un écoulement de fluide pour entraîner un axe en rotation pour produire de l'énergie.

La présente invention a donc pour objet un élément de rotor pour système de production d'énergie, comprenant :
- un axe ;
- une pluralité de pales identiques fixées sur l'axe, les pales étant juxtaposées les unes à la suite des autres sur l'axe et étant contiguës sur celui-ci ;
- chaque pale étant constituée de deux ailettes symétriques par rapport à l'axe assemblées sur l'axe ;
- les pales étant agencées sur l'axe de l'élément de rotor à partir d'une première pale située à une extrémité sur l'axe de l'élément de rotor, de telle sorte que, pour deux pales consécutives sur l'axe, les plans moyens des deux pales contenant l'axe forment un angle constant,
caractérisé par le fait que chaque ailette d'une pale comprend une première surface, une deuxième surface orthogonale à la première surface, et une troisième surface, formant un angle avec la deuxième surface et située d'un même côté du plan formé par la deuxième surface que la première surface.

L'angle formé par la deuxième surface et la troisième surface est, de préférence, de l'ordre de 120°.

Cette structure des ailettes de chaque pale permet d'obtenir un mouvement saccadé du rotor lorsqu'il est entraîné par un écoulement de fluide sur les pales, le mouvement saccadé permettant de déclencher l'entraînement en rotation de l'éolienne, même avec un faible écoulement de fluide incident sur l'éolienne.

La symétrie par rapport à l'axe est l'opération de symétrie en trois dimensions qui, à chaque point d'une ailette, associe un point symétrique par rapport à l'axe dans un plan contenant l'axe et le point de l'ailette considéré, de telle sorte que dans le plan considéré, l'axe est la médiatrice du segment formé par le point de l'ailette considéré et son symétrique.

De part cette symétrie par rapport à l'axe, les ailettes d'une même pale sont donc en position opposée et inverse par rapport à l'axe, l'effet étant que, pour une même pale, la résistance de l'ailette opposée à l'ailette qui recueille le mouvement est minimale.

Le caractère contigu des pales sur l'axe permet de rendre maximale une surface de contact avec le fluide en écoulement sur l'élément de rotor. Cela permet également une circulation de fluide entre les différentes pales, puisque aucun élément ne sépare les différentes pales sur l'axe. Selon les utilisations du rotor, le fluide pourra être de l'air ou de l'eau, par exemple.

Selon une caractéristique facultative de l'élément de rotor de l'invention, l'angle formé entre les plans moyens de deux pales consécutives sur l'axe de l'élément de rotor et contenant l'axe de l'élément de rotor est égal à 360° divisé par le nombre de pales sur l'axe de l'élément de rotor.

Il y a ainsi une répartition uniforme des plans moyens des pales contenant l'axe sur 360° autour de l'axe de l'élément de rotor.

Selon une première variante facultative, les première, deuxième et troisième surfaces de chaque ailette sont rectangulaires.

Les surfaces de chaque ailette peuvent avoir une dimension commune dans la direction de l'axe de l'élément de rotor.

Selon une deuxième variante facultative, la dimension dans la direction de l'axe de l'élément de rotor de chaque ailette augmente de manière continue de l'extrémité de l'ailette liée à l'axe de l'élément de rotor à l'extrémité libre de l'ailette.

Selon une troisième variante facultative, chaque surface d'ailette est constituée de deux facettes orthogonales l'une à l'autre, les bordures communes des facettes de la première surface, des facettes de la deuxième surface et des facettes de la troisième surface appartenant toutes à un même plan orthogonal à l'axe.

La forme creuse de chaque ailette de la troisième variante de la pale permet une meilleure prise au vent de l'ailette face au flux incident de fluide, l'ailette face au flux incident de fluide étant définie comme étant l'ailette dont la deuxième surface est dans la direction du flux incident de fluide, s'étendant depuis la première surface dans le sens contraire au flux incident de fluide.

Pour la troisième variante dans laquelle chaque surface de la pale contient deux facettes orthogonales, l'angle entre deux surfaces de la pale est calculé comme étant l'angle entre le plan formant un angle de 45° avec chaque facette d'une surface et le plan formant un angle de 45° avec chaque facette de l'autre surface.

Le plan moyen de la pale pour cette troisième variante est alors le plan contenant l'axe de rotor et le plan formant un angle de 45° avec chaque facette des deux premières surfaces de la pale.

Chaque ailette peut comprendre un retour en équerre sur les bords des première, deuxième et troisième surfaces non parallèles à l'axe, ledit retour en équerre étant dirigé du côté de l'ailette dans lequel les première et deuxième surfaces forment un angle de 90°.

L'invention a également pour objet une éolienne à axe vertical, caractérisée par le fait qu'un élément de rotor tel que défini ci-dessus constitue le rotor de l'éolienne.

L'invention a également pour objet une éolienne à axe vertical, comprenant un axe vertical relié à une extrémité inférieure à une dynamo, et comprenant à son extrémité supérieure une ou plusieurs branches, chacune constituée par un élément de rotor tel que défini ci-dessus.

L'élément de rotor tel que défini ci-dessus peut également être mis en oeuvre sur d'autres dispositifs de production d'énergie que des éoliennes, utilisant l'écoulement d'un autre fluide que le vent.

L'élément de rotor tel que défini ci-dessus pourrait par exemple être utilisé pour produire de l'énergie par rotation de l'axe consécutive à un écoulement de fluide sur le rotor.

Pour mieux illustrer l'objet de la présente invention, on va maintenant en décrire plusieurs modes de réalisation préférés, en référence au dessin annexé.

Sur ce dessin :
- la Figure 1 est une vue en perspective d'un élément de rotor selon la présente invention ;
- la Figure 2 est une vue de dessus de l'élément de rotor de la Figure 1 ;
- la Figure 3 est une vue en perspective d'une première variante d'une pale de l'élément de rotor selon l'invention ;
- la Figure 4 est une vue en perspective analogue à la Figure 3 d'une seconde variante d'une pale de l'élément de rotor selon l'invention ;
- la Figure 5 est une vue en perspective d'une éolienne à axe vertical, sur laquelle est monté l'élément de rotor de la Figure 1 ;
- la Figure 6 est une vue de dessus du pied de l'éolienne selon la ligne VI-VI de la Figure 5 ;
- la Figure 7 est une vue schématique en perspective d'une autre éolienne à axe vertical utilisant l'élément de rotor selon la présente invention ;
- la Figure 8 est une vue schématique de dessus de l'éolienne à axe vertical représentée sur la Figure 7 ; et
- la Figure 9 est une vue en perspective d'une pale selon une troisième variante de l'invention.

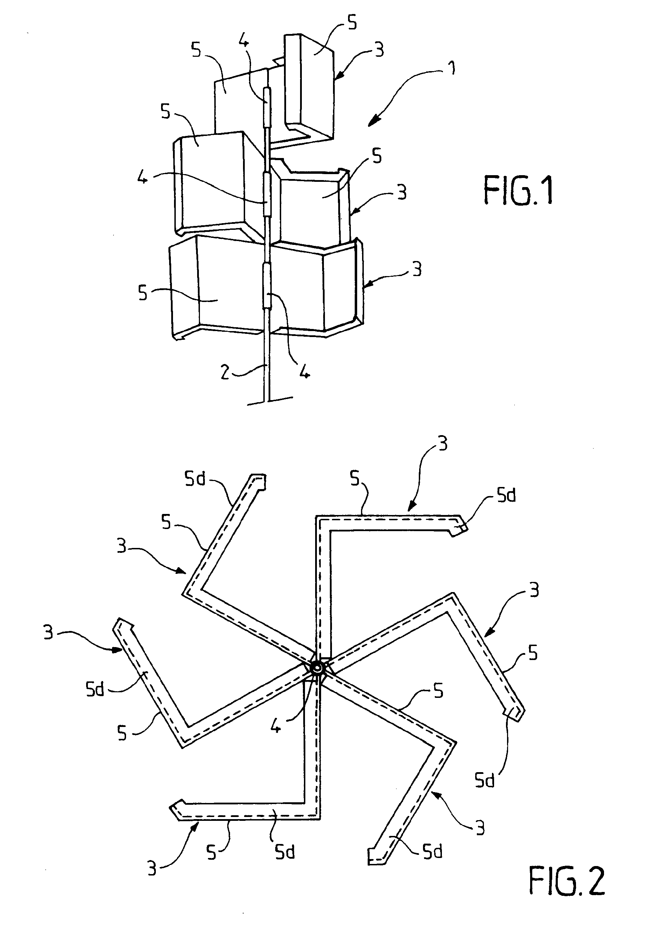

Si l'on se réfère aux Figures 1 à 3, on peut voir qu'il y est représenté un élément de rotor 1 selon la présente invention.

L'élément de rotor 1 comprend un axe 2 et une pluralité de pales 3, juxtaposées les unes aux autres sur l'axe 2.

Chaque pale 3 comprend un élément de fixation 4 sur l'axe 2 de l'élément de rotor 1, et deux ailettes 5, fixées, par exemple par soudure, sur l'élément de fixation 4.

Chaque ailette 5 est constituée de trois surfaces rectangulaires, 5a, 5b, 5c. La première surface rectangulaire 5a est fixée à l'élément de fixation 4 sur l'axe 2 de l'élément de rotor 1, la deuxième surface 5b est orthogonale à la première surface 5a, et la troisième surface 5c forme un angle d'environ 120° avec la deuxième surface 5b de l'ailette 5, les première et troisième surfaces 5a et 5c étant situées d'un même côté du plan formé par la deuxième surface 5b.

Un rebord 5d est formé de façon continue sur les bords inférieur et supérieur des première, deuxième et troisième surfaces 5a, 5b et 5c, correspondant aux bords de l'ailette 5 orthogonaux à l'axe 2 de l'élément de rotor 1, de telle sorte que le rebord 5d est orienté vers le côté fermé de l'ailette 5 correspondant au côté de l'ailette 5 où les surfaces 5a et 5b forment un angle de 90°.

Pour chaque pale 3, les ailettes 5 sont disposées de façon symétrique par rapport à l'élément de fixation 4 sur l'axe 2, de telle sorte que les deux surfaces 5a d'une pale 3 sont dans le même plan, appelé dans ce qui suit plan moyen de la pale 3, et que les surfaces 5b des ailettes 5 respectives sont situées chacune d'un côté différent de ce plan moyen de la pale 3, les plans des surfaces 5b étant parallèles.

Sur l'élément de rotor 1, les pales 5 sont fixées les unes au-dessus des autres sur l'axe 2 de manière contiguë, les plans moyens de deux pales 3 consécutives sur l'axe 2 de l'élément de rotor 1 formant un angle fixe, l'angle fixe correspondant à 360° divisé par le nombre de pales 3 sur l'axe 2.

Dans le mode de réalisation représenté sur les Figures 1 et 2, trois pales étant fixées sur l'axe 2, l'angle formé par les plans moyens de deux pales 3 consécutives sur l'axe 2 est de 120°.

Les plans moyens des pales 3 sont ainsi uniformément répartis autour de l'axe 2 pour couvrir uniformément une amplitude angulaire de 360° autour de l'axe 2 de l'élément de rotor 1.

Pour une mise en oeuvre avec un petit nombre de pales 3 sur l'axe 2, une couverture uniforme de l'amplitude angulaire de 360° autour de l'axe 2 pourra être obtenue en divisant 360° par le nombre de pales pour obtenir l'angle formé par les plans moyens de deux pales consécutives sur l'axe 2.

Pour un plus grand nombre de pales, on pourra envisager de faire plusieurs groupes de pales consécutives sur l'axe, les pales dans chaque groupe couvrant uniformément une amplitude angulaire de 360° autour de l'axe de l'élément de rotor, et fixer les différents groupes de pales les uns au-dessus/à la suite des autres sur l'axe de l'élément de rotor.

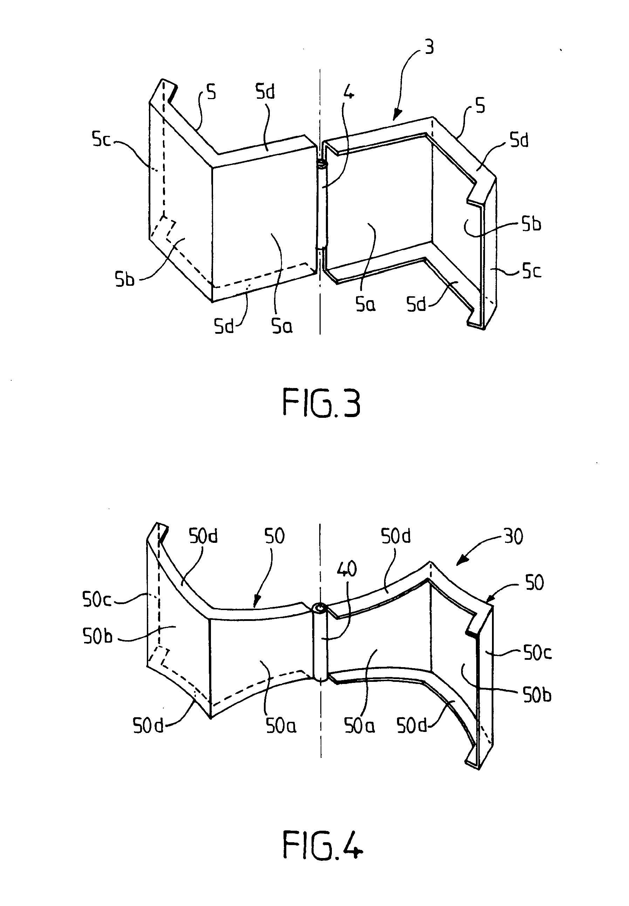

Si l'on se réfère à la Figure 4, on peut voir qu'il y est représenté une pale 30 selon une seconde variante.

Comme la pale 3 représentée sur la Figure 3, la pale 30 comprend un élément de fixation 40 sur l'axe 2 de l'élément de rotor 1, et deux ailettes 50, fixées par exemple par soudure sur l'élément de fixation 40.

Chaque ailette 50 est constituée de trois surfaces, 50a, 50b, 50c. La première surface 50a est fixée à l'élément de fixation 40 sur l'axe 2 de l'élément de rotor 1, la deuxième surface 50b est orthogonale à la première surface 50a, et la troisième surface 50c forme un angle d'environ 120° avec la deuxième surface 50b de l'ailette 50, les première et troisième surfaces 50a et 50c étant situées d'un même côté du plan formé par la deuxième surface 50b.

Un rebord 50d est formé de façon continue sur les bords inférieur et supérieur des première, deuxième et troisième surfaces 50a, 50b et 50c, correspondant aux bords de l'ailette 50 orthogonaux à l'axe 2 de l'élément de rotor 1, de telle sorte que le rebord 50d est orienté vers le côté fermé de l'ailette 50 correspondant au côté de l'ailette 50 où les surfaces 50a et 50b forment un angle de 90°.

La forme de l'ailette 50 diffère de celle de l'ailette à surfaces rectangulaires 5 de la Figure 3 par le fait que la dimension en coupe transversale de chaque surface de l'ailette 50 augmente de façon continue depuis le bord de l'ailette 50 fixé à l'élément de fixation 40 jusqu'au bord d'extrémité correspondant au bord libre de là surface 50c de l'ailette 50.

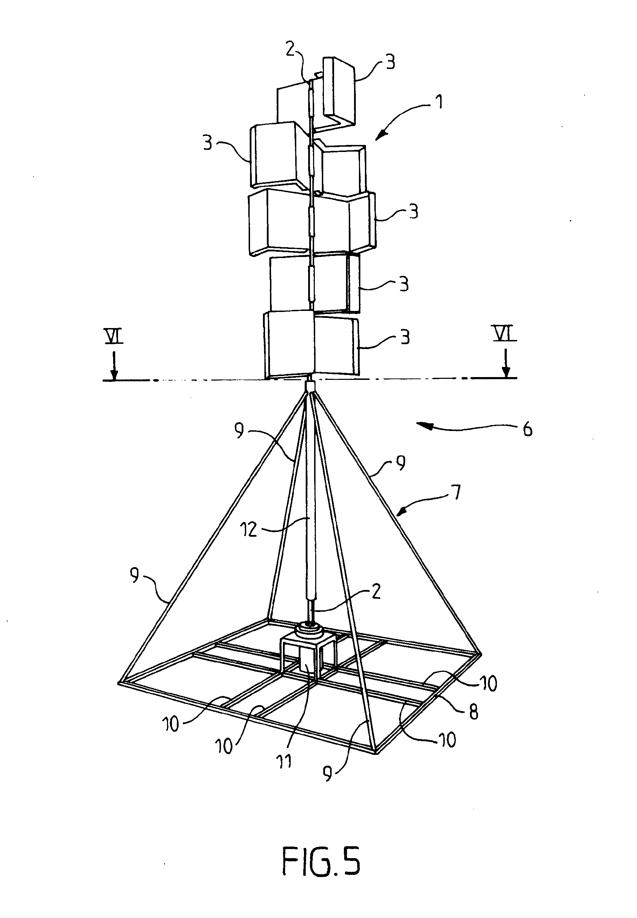

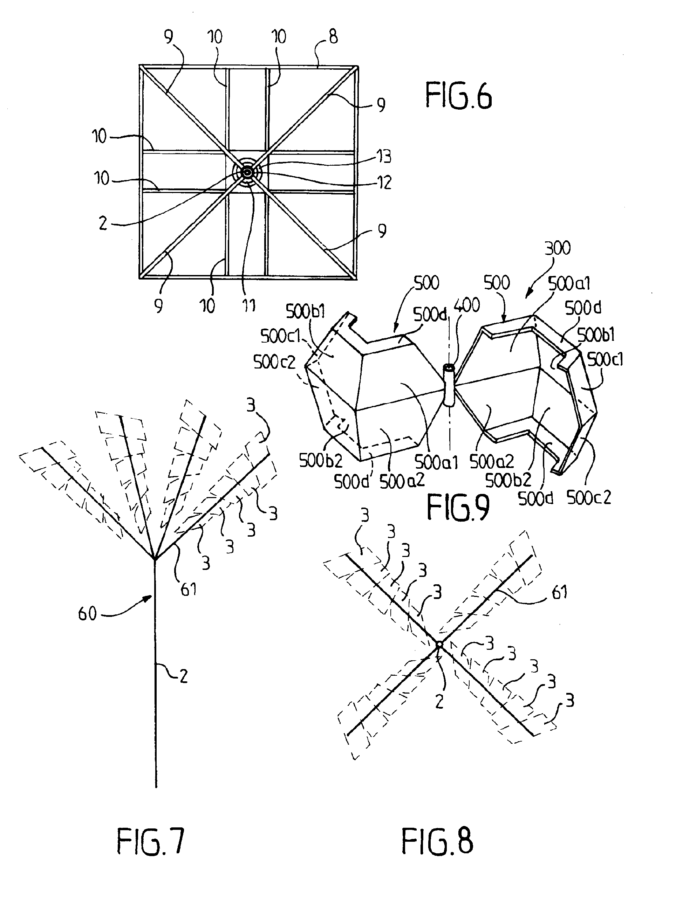

Si l'on se réfère à la Figure 5 et à la Figure 6, on peut voir qu'il y est représenté l'élément de rotor 1 de l'invention utilisé en tant que rotor dans une éolienne à axe vertical 6, comprenant l'élément de rotor 1 de la Figure 1, et un pied 7.

Comme indiqué ci-dessus, l'élément de rotor 1 comprend plusieurs groupes de pales 3, les plans moyens des pales 3 étant uniformément répartis à 360° autour de l'axe 2, pour une prise au vent optimale de l'élément de rotor 1.

Le pied 7 de l'éolienne 6 est de forme pyramidale carrée, et comprend un cadre de base carré 8, et quatre montants 9 formant les arêtes dirigées vers le sommet de la pyramide. Des éléments de renfort 10 relient des bords opposés du cadre de base 8 pour renforcer sa structure.

Un ensemble de générateur électrique 11 de type dynamo est monté au centre du cadre de base 8.

Un tube 12, creux, vertical, est fixé à son extrémité supérieure au sommet de la pyramide, et est dirigé vers le centre du cadre de base 8 et l'ensemble de générateur électrique 11.

L'axe 2 de l'élément de rotor est introduit à l'intérieur du tube 12, et est apte à tourner dans celui-ci au moyen de roulements 13 disposés à l'intérieur du tube creux 12, le tube 12 servant de guide pour la rotation de l'axe 2.

Ainsi, l'éolienne 6 étant placée à l'extérieur, l'action du vent sur l'élément de rotor 1 va provoquer une rotation de celui-ci, qui sera transmise à l'ensemble de générateur électrique 11 par l'axe 2 de l'élément de rotor, de manière connue pour les éoliennes à axe vertical.

Les Figures 7 et 8 illustrent de manière schématique une autre application de l'élément de rotor selon la présente invention sur une éolienne dite en arbuste.

Dans cette application, une éolienne à axe vertical 60 est constituée d'un axe vertical 2, au sommet duquel quatre branches 61 sont fixées, chaque branche 61 étant constituée par un élément de rotor selon l'invention, avec une pluralité de pales 3 représentées schématiquement pour faciliter la lecture de la Figure. Chaque élément de rotor 61 est fixe par rapport à l'axe 2 de l'éolienne 60, mais l'action de l'écoulement du vent sur les pales 3 des éléments de rotor 61 va entraîner la rotation de l'axe 2, lequel, comme pour l'éolienne des Figures 5 et 6, est relié à un système de générateur électrique (non représenté).

Si l'on se réfère à la Figure 9, on peut voir qu'il y est représenté une pale selon une troisième variante de la présente invention. Dans cette variante, la pale 300 est constituée, comme pour les pales des autres variantes, de deux ailettes 500, symétriques par rapport à l'axe 2 sur lequel la pale 300 est assemblée, les deux ailettes 500 étant assemblées sur l'axe 2 suivant une bordure latérale de celle-ci.

Chaque ailette 500 est constituée de trois surfaces 500a, 500b et 500c, chaque surface 500a, 500b, 500c étant constituée de deux facettes 500a1, 500a2 pour la première surface 500a, 500b1, 500b2 pour la deuxième surface 500b, et 500c1, 500c2 pour la troisième surface 500c. Les deux facettes de chaque surface 500a, 500b, 500c sont orthogonales l'une à l'autre sur une bordure commune, les bordures communes des facettes 500a1, 500a2, 500b1, 500b2, 500c1, 500c2 appartenant toutes à un même plan orthogonal à l'axe 2.

La première surface 500a est fixée à l'élément de fixation 400 sur l'axe 2 de telle sorte que le plan Pa formant un angle de 45° avec les deux facettes 500a1 et 500a2 de la première surface 500a contient l'axe 2, le plan Pb formant un angle de 45° avec les facettes 500b1 et 500b2 de la deuxième surface 500b étant orthogonal au plan Pa, et le plan Pc formant un angle de 45° avec les facettes 500c1 et 500c2 de la troisième surface 500c formant un angle d'environ 120° avec le plan Pb de l'ailette 500, les première et troisième surfaces 500a et 500c étant situées d'un même côté du plan Pb de la deuxième surface 500b.

Un rebord 500d est formé de façon continue sur les bords inférieur et supérieur des première, deuxième et troisième surfaces 500a, 500b et 500c, correspondant aux bords de l'ailette 500 orthogonaux à l'axe 2 de l'élément de rotor 1, de telle sorte que le rebord 500d est orienté vers le côté fermé de l'ailette 500 correspondant au côté de l'ailette 500 où les plans Pa et Pb forment un angle de 90°.

## Revendications

1. Élément de rotor (1) pour système de production d'énergie (6 ; 60), comprenant :
- un axe (2) ;
- une pluralité de pales (3 ; 30 ; 300) identiques fixées sur l'axe (2), les pales (3 ; 30 ; 300) étant juxtaposées les unes à la suite des autres sur l'axe (2) et étant contiguës sur celui-ci ;
- chaque pale (3; 30 ; 300) étant constituée de deux ailettes (5; 50 ; 500) symétriques par rapport à l'axe (2) assemblées sur l'axe (2) ;
- les pales (3; 30 ; 300) étant agencées sur l'axe (2) de l'élément de rotor (1) à partir d'une première pale (3; 30 ; 300) située à une extrémité sur l'axe (2) de l'élément de rotor (1), de telle sorte que, pour deux pales (3; 30 ; 300) consécutives sur l'axe (2), les plans moyens des deux pales (3; 30 ; 300) contenant l'axe (2) forment un angle constant
**caractérisé par le fait que** chaque ailette (5; 50 ; 500) d'une pale (3; 30 ; 300) comprend une première surface (5a ; 50a ; 500a), une deuxième surface (5b ; 50b ; 500b) orthogonale à la première surface (5a ; 50a ; 500a), et une troisième surface (5c ; 50c ; 500c), formant un angle avec la deuxième surface (5b ; 50b ; 500b) et située d'un même côté du plan formé par la deuxième surface (5b ; 50b ; 500b) que la première surface (5a ; 50a ; 500a).

2. Élément de rotor (1) selon la revendication 1, **caractérisé par le fait que** l'angle formé entre les plans moyens de deux pales (3; 30 ; 300) consécutives sur l'axe (2) et contenant l'axe (2) est égal à 360° divisé par le nombre de pales (3; 30) sur l'axe (2).

3. Élément de rotor (1) selon l'une des revendications 1 ou 2, **caractérisé par le fait que** les première (5a), deuxième (5b) et troisième (5c) surfaces de chaque ailette (5) sont rectangulaires.

4. Élément de rotor (1) selon la revendication 3, **caractérisé par le fait que** les surfaces (5a, 5b, 5c) de chaque ailette (5) ont une dimension commune dans la direction de l'axe (2).

5. Élément de rotor (1) selon l'une des revendications 1 ou 2, **caractérisé par le fait que** la dimension dans la direction de l'axe (2) de chaque ailette (50) augmente de manière continue de l'extrémité de l'ailette (50) liée à l'axe (2) à l'extrémité libre de l'ailette (50).

6. Élément de rotor selon l'une des revendications 1 ou 2, **caractérisé par le fait que** chaque surface (500a, 500b, 500c) d'ailette (500) est constituée de deux facettes (500a1, 500a2 ; 500b1, 500b2 ; 500c1, 500c2) orthogonales l'une à l'autre, les bordures communes des facettes (500a1, 500a2) de la première surface (500a), des facettes (500b1, 500b2) de la deuxième surface (500b) et des facettes (500c1, 500c2) de la troisième surface (500c) appartenant toutes à un même plan orthogonal à l'axe (2).

7. Élément de rotor (1) selon l'une des revendications 3 à 6, **caractérisé par le fait que** chaque ailette (5; 50 ; 500) comprend un retour en équerre sur les bords des première, deuxième et troisième surfaces (5a, 5b, 5c ; 50a, 50b, 50c ; 500a, 500b, 500c) non parallèles à l'axe, ledit retour en équerre étant dirigé du côté de l'ailette (5; 50 ; 500) dans lequel les première et deuxième surfaces (5a, 5b ; 50a, 50b ; 500a, 500b) forment un angle de 90°.

8. Eolienne (6) à axe vertical, **caractérisée par le fait que** l'élément de rotor (1) tel que défini à l'une quelconque des revendications 1 à 7 constitue le rotor (1) de l'éolienne (6).

9. Eolienne (60) à axe vertical, comprenant un axe vertical (2) relié à une extrémité inférieure à une dynamo (11), et comprenant à son extrémité supérieure une ou plusieurs branches (61), chacune constituée par un élément de rotor (1) tel que défini à l'une quelconque des revendications 1 à 7.

## Patentansprüche

1. Rotorelement (1) für ein Energieerzeugungssystem (6; 60), das Folgendes umfasst:
- eine Achse (2);
- eine Vielzahl von identischen Blättern (3; 30; 300), die an der Achse (2) befestigt sind, wobei die Blätter (3; 30; 300) nebeneinander hintereinander an der Achse (2) angeordnet sind und an dieser angrenzen;
- wobei jedes Blatt (3; 30; 300) aus zwei zur Achse (2) symmetrischen Flügeln (5; 50; 500) gebildet ist, die an der Achse (2) montiert sind;
- wobei die Blätter (3; 30; 300) an der Achse (2) des Rotorelements (1) von einem ersten Blatt (3; 30; 300) ausgehend, das sich an einem Ende an der Achse (2) des Rotorelements (1) befindet, derart angeordnet sind, dass bei zwei an der Achse (2) aufeinanderfolgenden Blättern (3; 30; 300) die Mittelebenen der beiden Blätter (3; 30; 300), die die Achse (2) enthalten, einen gleichbleibenden Winkel bilden,
**dadurch gekennzeichnet, dass** jeder Flügel (5; 50; 500) eines Blatts (3; 30; 300) eine erste Fläche (5a; 50a; 500a), eine zweite Fläche (5b; 50b; 500b) rechtwinklig zur ersten Fläche (5a; 50a; 500a) und eine dritte Fläche (5c; 50c; 500c) umfasst, die einen Winkel mit der zweiten Fläche (5b; 50b; 500b) bildet und sich auf derselben Seite der Ebene, die von der zweiten Fläche (5b; 50b; 500b) gebildet wird, wie die erste Fläche (5a; 50a; 500a) befindet.

2. Rotorelement (1) nach Anspruch 1, **dadurch gekennzeichnet, dass** der Winkel, der zwischen den Mittelebenen der beiden Blätter (3; 30; 300) gebildet wird, die an der Achse (2) aufeinander folgen, und die die Achse (2) enthalten, 360° geteilt durch die Anzahl der Blätter (3; 30) an der Achse (2) entspricht.

3. Rotorelement (1) nach einem der Ansprüche 1 oder 2, **dadurch gekennzeichnet, dass** die erste (5a), zweite (5b) und dritte Fläche (5c) jedes Flügels (5) rechteckig sind.

4. Rotorelement (1) nach Anspruch 3, **dadurch gekennzeichnet, dass** die Flächen (5a, 5b, 5c) jedes Flügels (5) eine gemeinsame Abmessung in der Richtung der Achse (2) aufweisen.

5. Rotorelement (1) nach einem der Ansprüche 1 oder 2, **dadurch gekennzeichnet, dass** die Abmessung jedes Flügels (50) in Richtung der Achse (2) von dem Ende des Flügels (50), das mit der Achse (2) verbunden ist, zu dem freien Ende des Flügels (50) hin kontinuierlich größer wird.

6. Rotorelement nach einem der Ansprüche 1 oder 2, **dadurch gekennzeichnet, dass** jede Fläche (500a, 500b, 500c) des Flügels (500) aus zwei kleinen Flächen (500a1, 500a2; 500b1, 500b2; 500c1, 500c2) gebildet ist, die rechtwinklig zueinander verlaufen, wobei die gemeinsamen Ränder der kleinen Flächen (500a1, 500a2) der ersten Fläche (500a), der kleinen Flächen (500b1, 500b2) der zweiten Fläche (500b) und der kleinen Flächen (500c1, 500c2) der dritten Fläche (500c) alle zu ein und derselben Ebene rechtwinklig zur Achse (2) zugehörig sind.

7. Rotorelement (1) nach einem der Ansprüche 3 bis 6, **dadurch gekennzeichnet, dass** jeder Flügel (5; 50; 500) eine rechtwinklige Abwinklung an den nicht parallel zur Achse verlaufenden Rändern der ersten, zweiten und dritten Fläche (5a, 5b, 5c; 50a, 50b, 50c; 500a, 500b, 500c) umfasst, wobei die rechtwinklige Abwinklung zu der Seite des Flügels (5; 50; 500), bei der die erste und zweite Fläche (5a, 5b; 50a, 50b; 500a, 500b) einen Winkel von 90° bilden, gerichtet ist.

8. Vertikalachswindkraftanlage (6), **dadurch gekennzeichnet, dass** das Rotorelement (1) nach einem der Ansprüche 1 bis 7 den Rotor (1) der Windkraftanlage (6) bildet.

9. Vertikalachswindkraftanlage (60), das eine Vertikalachse (2) umfasst, die an einem unteren Ende mit einem Generator (11) verbunden ist und an ihrem oberen Ende ein oder mehrere Arme (61) umfasst, der jeweils von einem Rotorelement (1) nach einem der Ansprüche 1 bis 7 gebildet ist.

## Claims

1. A rotor member (1) for an energy producing system (6 ; 60), comprising:
- an axis (2);
- a plurality of identical blades (3 ; 30 ; 300) attached on the axis (2), the blades (3 ; 30 ; 300) being juxtaposed one after the other on the axis (2) and being contiguous thereon;
- each blade (3 ; 30 ; 300) being constituted by two fins (5 ; 50 ; 500) symmetrical with respect to the axis (2), assembled on the axis (2);
- the blades (3 ; 30 ; 300) being arranged on the axis (2) of the rotor member (1) from a first blade (3 ; 30 ; 300) located at one end on the axis (2) of the rotor member (1), such that, for two consecutive blades (3 ; 30 ; 300) on the axis (2), the middle planes of two blades (3 ; 30 ; 300) containing the axis (2) form a constant angle
**characterized by** the fact that each fin (5 ; 50 ; 500) of a blade (3 ; 30 ; 300) comprises a first surface (5a ; 50a ; 500a), a second surface (5b ; 50b ; 500b) orthogonal to the first surface (5a ; 50a ; 500a) and a third surface (5c ; 50c ; 500c), forming an angle with the second surface (5b ; 50b ; 500b) and located on a same side of the plane formed by the second surface (5b ; 50b ; 500b) as the first surface (5a ; 50a ; 500a).

2. The rotor member (1) according to claim 1, **characterized by** the fact that the angle formed between the middle planes of two consecutive blades (3 ; 30 ; 300) on the axis (2) and containing the axis (2) is equal to 360° divided by the number of blades (3 ; 30) on the axis (2).

3. The rotor member (1) according to one of claims 1 or 2, **characterized by** the fact that the first (5a), second (5b) and third (5c) surfaces of each fin (5) are rectangular.

4. The rotor member (1) according to claim 3, **characterized by** the fact that the surfaces (5a, 5b, 5c) of each fin (5) have a common size in the direction of the axis (2).

5. The rotor member (1) according to one of claims 1 or 2, **characterized by** the fact that the size in the direction of the axis (2) of each fin (5) continuously increases from the end of the fin (50) linked to the axis (2) to the free end of the fin (50).

6. The rotor member (1) according to one of claims 1 or 2, **characterized by** the fact that each surface (5a, 5b, 5c) of a fin (500) is constituted by two facets (500a1, 500a2 ; 500b1, 500b2 ; 500c1, 500c2) orthogonal to each other, wherein the common edges of the facets (500a1, 500a2) of the first surface (500a), of the facets (500b1, 500b2) of the second surface (500b) and of the facets (500c1, 500c2) of the third surface (500c) all belong to a same plane orthogonal to the axis (2).

7. The rotor member (1) according to one of claims 3 to 6, **characterized by** the fact that each fin (5 ; 50 ; 500) comprises a right angle return on the edges of the first, second and third surfaces (5a, 5b, 5c ; 50a, 50b, 50c ; 500a, 500b, 500c), non-parallel to the axis (2), said right angle return being oriented toward the side of the fin (5 ; 50 ; 500) in which the first and second surfaces (5a, 5b ; 50a, 50b ; 500a, 500b) form a 90° angle.

8. A wind turbine (6) with a vertical axis, **characterized by** the fact that the rotor member (1) as defined in any one of claims 1 to 7 constitutes the rotor (1) of the wind turbine (6).

9. A wind turbine (60) with a vertical axis, comprising a vertical axis (2) connected at a lower end to a dynamo (11), and comprising at its upper end one or more arms (61), each constituted by a rotor member (1) as defined in any one of claims 1 to 7.
